# EUROPEAN PATENT SPECIFICATION

(11) **EP 3 456 978 B1**
(45) Date of publication and mention of the grant of the patent: **11.05.2022**
(21) Application number: 18190536.5
(22) Date of filing: 23.08.2018
(51) Int. Cl.: F04D 25/06, F04D 25/08, H02K 5/20, F04D 29/08, H02K 5/22

(54) **BLOWER DEVICE**
GEBLÄSEVORRICHTUNG
DISPOSITIF DE SOUFFLAGE

(30) Priority: 13.09.2017 JP 2017176209
(43) Date of publication of application: 20.03.2019
(73) Proprietor: Shinano Kenshi Co., Ltd., Ueda-shi, Nagano 386-0498 (JP)
(72) Inventor: FUKUZAWA, Akihito, Ueda-shi, Nagano 386-0498 (JP)
(74) Representative: Haseltine Lake Kempner LLP

(56) References cited:
- WO-A1-2012/023245
- WO-A1-2016/103605
- JP-A- H10 191 595
- JP-A- 2011 166 857
- US-B1- 6 339 267

## Description

### [TECHNICAL FIELD]

The present invention relates to a blower device.

### [BACKGROUND ART]

Patent Document 1 discloses a device including an air path guiding air to heat dissipation fins provided in a yoke of a motor.

### [PRIOR ART DOCUMENT]

### [PATENT DOCUMENT]

[Patent Document 1] Japanese Unexamined Patent Application Publication No. 2008-207645
[Patent Document 2] US6339267 (B1) describes, in a brushless motor apparatus, a rotor which is rotatably supported on a stator so that the rotor is rotated by energization of the stator. [Patent Document 3] JPH10191595(A)describes enhancing the cooling capacity of a driving element while reducing the dimension of a fan in the direction of height thereof by fixing the driving element to the horizontal surface of a housing having high heat quantity thereby cooling the driving element forcibly.
[Patent Document 3] WO2016103605 (A1) describes a motor being provided with: a stator; a rotor disposed coaxially with the stator a circuit board disposed at one end, in the axial direction, of the stator, and having a sensor for detecting the rotational angle of the rotor and a switching element for controlling energization; and a heat dissipating plate disposed at the one end, in the axial direction, of the stator.

### [SUMMARY OF THE INVENTION]

### [PROBLEMS TO BE SOLVED BY THE INVENTION]

In Patent Document 1, the coils of the motor are surrounded by the yoke. This might degrade the cooling property of the coils of the motor.

It is therefore desirable to provide a blower device that ensures cooling property of a coil of a motor.

### [MEANS FOR SOLVING THE PROBLEMS]

A blower device according to claim 1 is provided.

### [EFFECTS OF THE INVENTION]

According to the present invention, it is possible to provide a blower device that ensures cooling property of a coil of a motor.

### [BRIEF DESCRIPTION OF THE DRAWINGS]

FIG. 1 is an external view of a blower device according to the present embodiment;
FIG. 2 is a cross-sectional view taken along line A-A of FIG. 1;
FIG. 3 is a cross-sectional view taken along line B-B of FIG. 1; and
FIG. 4A is an explanatory view of a stator, and FIG. 4B is a view illustrating the stator to which a cover is attached.

### [MODES FOR CARRYING OUT THE INVENTION]

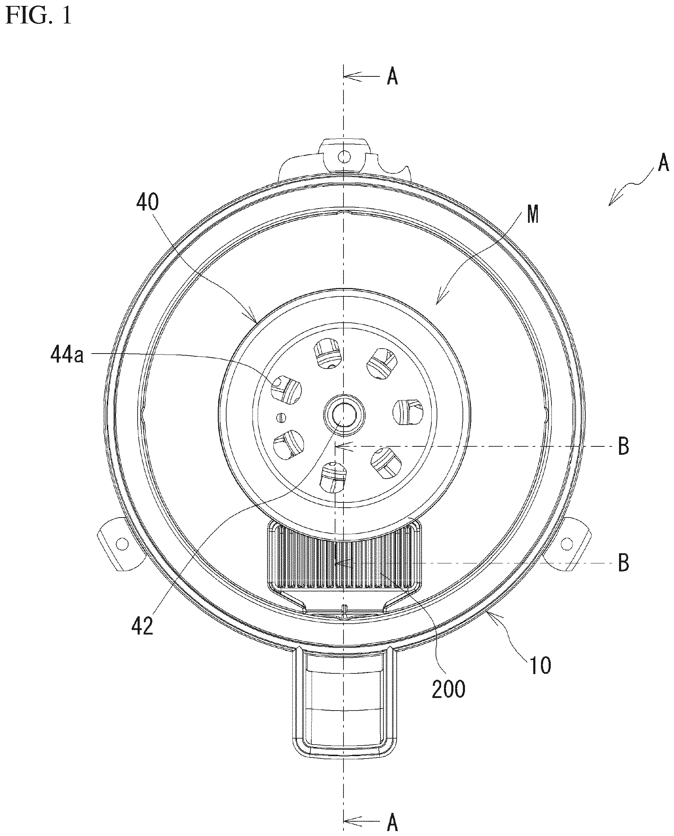

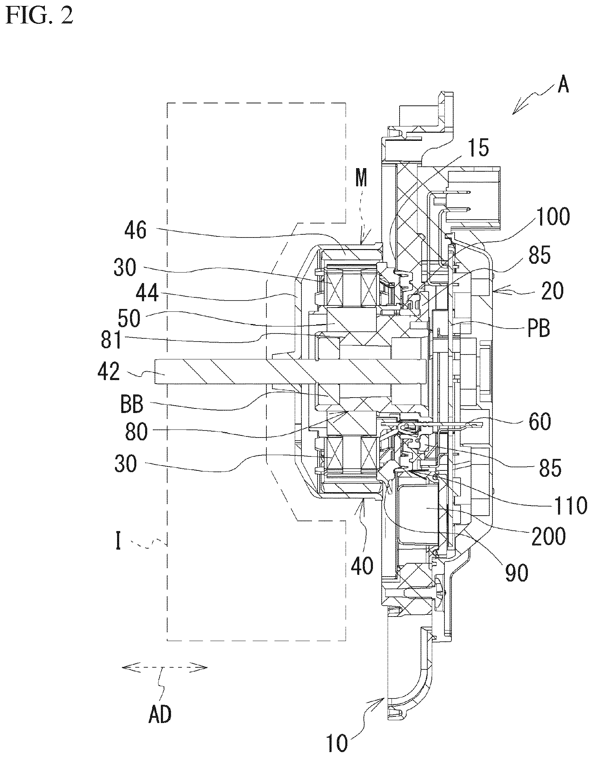

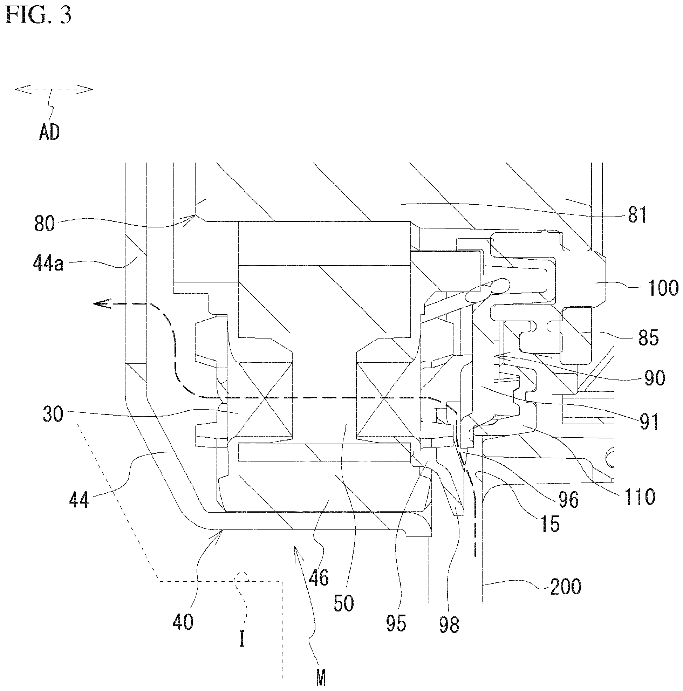

FIG. 1 is an external view of a blower device A according to the present embodiment. FIG. 2 is a cross-sectional view taken along line A-A of FIG. 1. FIG. 3 is a cross-sectional view taken along line B-B of FIG. 1. The blower device A includes cases 10 and 20, a motor M, a fan I rotated by the motor M, a printed circuit board PB electrically connected to the motor M, and the like. Additionally, the fan I is illustrated only in FIGs. 2 and 3, and is omitted in the other drawings. The motor M and the fan I are positioned on one side with respect to the case 10. A case 20 is attached to the other side of the case 10. The cases 10 and 20, each formed into a semi-casing shape, are assembled into each other to house the printed circuit board PB. The cases 10 and 20 are made of, but not limited to, a synthetic resin, and may be made of a metal. Additionally, the case 10 exposes a heat sink 200 made of a metal and thermally connected to the printed circuit board PB. The heat sink 200 faces the fan I. The heat dissipation of the heat sink 200 is promoted by the rotation of the fan I, thereby ensuring the cooling property of the printed board PB.

The motor M will be described. As illustrated in FIG. 2, the motor M is positioned between the fan I and the case 10. The motor M includes coils 30, a rotor 40, a stator 50, a housing 80, a cover 90, and the like. The stator 50, made of a metal, will be described later in detail. The coils 30 are wound around respective teeth portions of the stator 50. The coils 30 are electrically connected to the printed circuit board PB via terminals 60 which are not electrically connected to and is supported by the stator 50. Parts for controlling the energization states of the coils 30 are mounted on the printed circuit board PB. The cover 90 will be described later.

The rotor 40 includes a rotational shaft 42, a yoke 44, and one or more permanent magnets 46. The rotational shaft 42, penetrating through the housing 80, is rotatably supported. Specifically, the rotational shaft 42 is rotatably supported by a bearing BB held in the housing 80. The yoke 44, made of a metal having a substantially cylindrical shape, is fixed to the rotational shaft 42 outside the housing 80. The housing 80 includes: a cylindrical portion 81 having a substantially cylindrical shape; and a flange portion 85 having a disk shape, having an outer diameter larger than that of the cylindrical portion 81, and positioned at an end portion of the cylindrical portion 81 near the printed circuit board PB. The flange portion 85 is formed with receiving holes through which the respective terminals 60 penetrate. One or more permanent magnets 46 are fixed to an inner circumferential surface of the yoke 44. Additionally, the yoke 44 is provided with vent holes 44a around the rotational shaft 42, thereby promoting heat dissipation of the motor M. The permanent magnets 46 face an outer side of the teeth portions of the stator 50. When the coils 30 are energized to excite the teeth portions of the stator 50, the magnetic attractive force and the magnetic repulsive force are exerted between the permanent magnets 46 and the teeth portions, whereby the yoke 44, that is, the rotor 40 rotates relative to the stator 50. In such a manner, the motor M is an outer rotor type motor in which the rotor 40 rotates.

An opening is formed substantially at the center of the case 10. The housing 80 is disposed so as to penetrate this opening. Specifically, the flange portion 85 of the housing 80 is positioned within the cases 10 and 20 near the printed circuit board PB side, and the cylindrical portion 81 is arranged to protrude outward from the opening. Between the cover 90 and a peripheral wall portion 15 of the case 10 located around the opening, a rubber member 110 having a substantially annular shape is arranged in a compressed state in the axial direction AD. The rubber member 110 is an example of an elastic body. Between the flange portion 85 of the housing 80 and the peripheral wall portion 15, and between the flange portion 85 and the cover 90, a rubber member 100 having a substantially annular shape is arranged in a compressed state in the axial direction AD. The rubber member 100 is arranged substantially concentrically with the rubber member 110. The outer diameter of the rubber member 100 is smaller than that of the rubber member 110. Since the rubber members 100 and 110 are compressed in the axial direction AD, gaps are sealed by the elastic restoring forces thereof, so that dustproofness, waterproofness and vibration-proofness are ensured.

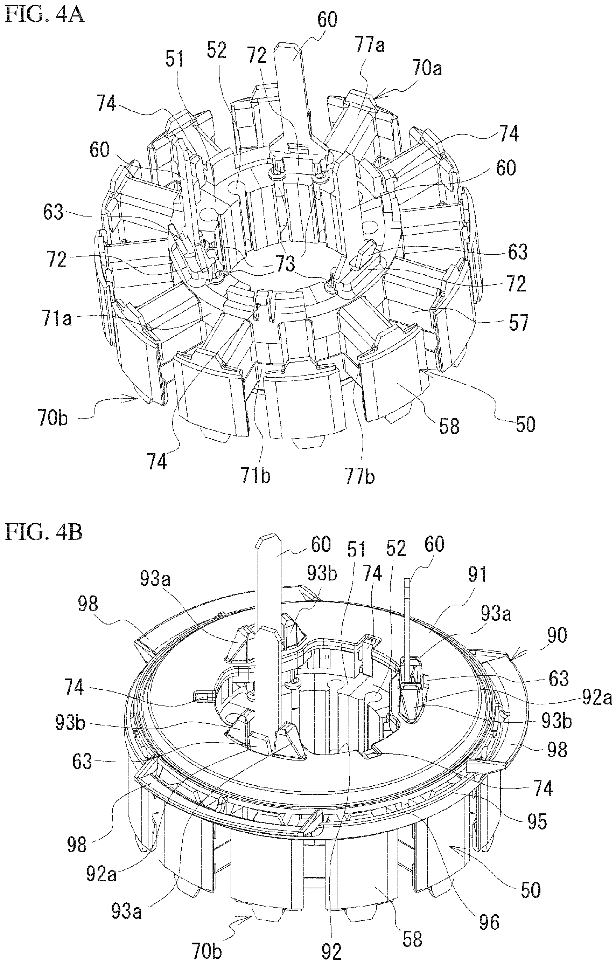

Next, a description will be given of the stator 50 and the cover 90. FIG. 4A is the stator 50. FIG. 4A illustrates the stator 50 into which insulators 70a and 70b are assembled. The three terminals 60 are assembled into the insulator 70a. The stator 50 includes an annular portion 51, teeth portions 57, and magnetic pole portions 58. The teeth portions 57 extend radially outward from the annular portion 51. The magnetic pole portions 58, formed at respective ends of the teeth portions 57, face the above-described permanent magnets 46. Grooves 52 are provided in the inner circumference of the annular portion 51.

Each of the insulators 70a and 70b is made of a synthetic resin having insulating property. The insulator 70a is assembled into the stator 50 near the case 10. The insulator 70b is assembled into the stator 50 near the fan I. The insulator 70a includes an annular covering portion 71a and teeth covering portions 77a. The annular covering portion 71a is formed into a substantially annular shape so as to cover an outer circumferential side of an end portion, in the axial direction AD, of the annular portion 51 of the stator 50 and to cover a part of an outer circumferential surface of the annular portion 51. The teeth covering portions 77a, extending radially outward from the annular covering portion 71a, cover respective sides of the teeth portions 57 of the stator 50. As illustrated in FIG. AA, the insulator 70b also includes an annular covering portion 71b and teeth covering portions 77b. Additionally, the insulators 70a and 70b expose the magnetic pole portions 58. Although not illustrated in FIG. 3, the coils 30 described above are wound around the respective teeth portions 57 of the stator 50 via the teeth covering portions 77a and 77b.

As illustrated in FIG. 4A, the annular covering portion 71a is provided with holding portions 72. The terminals 60 are held by the respective holding portions 72. Each holding portion 72 is provided with two engaging pins 73. The engaging pin 73 is fitted into the groove 52. As illustrated in FIG. 4A, the terminal 60 is formed with a bent portion 63 which is partially cut out and bent radially outward. A part of the coil 30 is pulled out and hooked to the bent portion 63. Thus, the coil 30 and the terminal 60 are electrically connected to each other. As illustrated in FIG. 2, a distal end of the terminal 60 is electrically connected to the printed circuit board PB via a metal member.

As illustrated in FIG. 4A, the annular covering portion 71a is provided with three snap-fit claws 74 at substantially equal angular intervals. The snap-fit claw 74 is provided between the holding portions 72. The snap-fit claw 74 is engaged with the cover 90 described later, which fixes the cover 90 to the insulator 70a.

FIG. 4B is a view illustrating the stator 50 to which the cover 90 is attached. The cover 90, made of a synthetic resin, includes a disk portion 91, a cylindrical portion 95, and blade portions 98. The disk portion 91 has a substantially disc shape having an opening portion 92 in the center. Further, the snap-fit claws 74 are engaged with the disk portion 91 in the vicinity of the opening portion 92. The cylindrical portion 95, provided near the outer peripheral edge of the disk portion 91, is arranged so as to cover a part of the outer circumference of the stator 50. The blade portions 98 are provided in the cylindrical portion 95 and protrude radially outward. A vent hole 96 is formed on the outer periphery of the cylindrical portion 95, which ensure air permeability. The blade portion 98 is an example of a guide portion.

Through holes 92a from which the respective terminals 60 protrudes are formed around the opening portion 92. A part of the bent portion 63 also protrudes together with the terminal 60 from the through hole 92a. Protruding portions 93a and 93b are formed in the disk portion 91 in the vicinity of the through hole 92a. The protruding portions 93a and 93b are positioned to sandwich the terminal 60 in the width direction thereof. The terminals 60, the bent portions 63, the protruding portions 93a and 93b are covered with a part of the rubber member 100, which ensures dustproofness and waterproofness thereof.

Next, a description will be given of the flow of air flowing through the motor M via the vent hole 96 of the cover 90 with reference to FIG. 3. When the fan I rotates, air flows from the motor M toward the end of the rotating shaft 42. Thus, as indicated by an arrow illustrated in FIG. 3, air flows from the radial outside of the cover 90 along the peripheral wall portion 15 of the case 10 into the cover 90 via the vent hole 96, and then flows between the coils 30 in the axial direction AD, which is discharged from the vent holes 44a of the yoke 44. This ensures the heat radiation property of the coils 30. In addition, the blade portions 98 protrude radially outward from the cylindrical portion 95 along the peripheral wall portion 15 of the case 10. It is possible to facilitate guiding the air, flowing along the peripheral wall portion 15 in response to the rotation of the fan I, to the inside. Further, the vent hole 96 is positioned radially outward from the rubber member 110. Therefore, dustproofness, waterproofness and vibration-proofness are ensured by the rubber member 110 while ensuring the heat dissipation of the coils 30.

The vent hole 96 is formed to be longer in the circumferential direction than in the axial direction AD, and is formed throughout the circumferential direction of the cylindrical portion 95. This ensures the amount of air introduced into the motor M.

In the present embodiment, air is introduced into the motor M from the vent hole 96 and is discharged from the vent holes 44a. However, the air flowing direction is not limited thereto. That is, air may be introduced into the motor M from the vent holes 44a and may be discharged from the vent hole 96. As for the rubber members 100 and 110, a member made of a material having elasticity other than rubber may be used as long as the above-described use is satisfied.

## Claims

1. A blower device (A) comprising:
a fan (I);
a motor (M) rotating the fan (I);
a cover (90) covering a stator (50) and a coil (30) of the motor (M);
a printed circuit board (PB) electrically connected to the coil (30);
a case (10, 20) housing the printed circuit board (PB) and facing the fan (I); and
an elastic body (110) arranged between the case (10, 20) and the cover (90) and formed into an annular shape,
a rotor (40) of the motor (M) including a rotational shaft (42) and a yoke (44),
**characterized in that**
the cover (90) is formed with a vent hole (96) arranged radially outward from the elastic body (110), the vent hole (96) faces the rotor (40) of the motor (M) in an axial direction of the motor (M);
and the yoke (44) is provided with vent holes (44a) around the rotational shaft (42) .

2. The blower device of claim 1, wherein a length of the vent hole (96) in a circumferential direction is greater than that of the vent hole (96) in an axial direction of the motor (M).

3. The blower device of claim 1 or 2, wherein
the cover (90) includes:
a disk portion (91) facing the coil (30) in an axial direction (AD) of the motor (M); and
a cylindrical portion (95) extending from an outer circumferential edge of the disk portion (91) in the axial direction (AD), and
the vent hole (96) is formed in the cylindrical portion (95).

4. The blower device of any one of claims 1 to 3, wherein
the cover (90) includes a guide portion (98) guiding air to the vent hole (96), and
the guide portion (98) protrudes radially outward from the cylindrical portion (95) and is arranged along a surface (15) of the case (10, 20) facing the fan (I).

## Patentansprüche

1. Gebläsevorrichtung (A), umfassend:
einen Lüfter (I);
einen Motor (M), der den Lüfter (I) dreht;
eine Abdeckung (90), die einen Stator (50) und eine Spule (30) des Motors (M) abdeckt;
eine Leiterplatte (PB), die elektrisch mit der Spule (30) verbunden ist;
ein Gehäuse (10, 20), das die Leiterplatte (PB) aufnimmt und dem Lüfter (I) zugewandt ist; und
einen elastischen Körper (110), der zwischen dem Gehäuse (10, 20) und der Abdeckung (90) angeordnet und in eine Ringform gebildet ist, wobei ein Rotor (40) des Motors (M) eine Drehwelle (42) und ein Joch (44) beinhaltet,
**dadurch gekennzeichnet, dass** die Abdeckung (90) mit einem Entlüftungsloch (96) gebildet ist, das radial außerhalb des elastischen Körpers (110) angeordnet ist, wobei das Entlüftungsloch (96) dem Rotor (40) des Motors (M) in einer axialen Richtung des Motors (M) zugewandt ist;
wobei das Joch (44) mit Entlüftungslöchern (44a) um die Drehwelle (42) versehen ist.

2. Gebläsevorrichtung gemäß Anspruch 1, wobei eine Länge des Entlüftungslochs (96) in einer Umfangsrichtung größer ist als die des Entlüftungslochs (96) in einer axialen Richtung des Motors (M).

3. Gebläsevorrichtung gemäß Anspruch 1 oder 2, wobei die Abdeckung (90) Folgendes beinhaltet:
einen Scheibenabschnitt (91), der der Spule (30) in einer axialen Richtung (AD) des Motors (M) zugewandt ist; und
einen zylindrischen Abschnitt (95), der sich von einem äußeren Umfangsrand des Scheibenabschnitts (91) in der axialen Richtung (AD) erstreckt, und wobei das Entlüftungsloch (96) in dem zylindrischen Abschnitt (95) gebildet ist.

4. Gebläsevorrichtung gemäß einem der Ansprüche 1 bis 3, wobei
die Abdeckung (90) einen Führungsabschnitt (98) beinhaltet, der Luft zu dem Entlüftungsloch (96) leitet, und
der Führungsabschnitt (98) von dem zylindrischen Abschnitt (95) radial nach außen ragt und entlang einer dem Gebläse (I) zugewandten Oberfläche (15) des Gehäuses (10, 20) angeordnet ist.

## Revendications

1. Un dispositif de soufflage (A) comprenant :
un ventilateur (I) ;
un moteur (M) faisant tourner le ventilateur (I) ;
un couvercle (90) couvrant un stator (50) et une bobine (30) du moteur (M) ;
une carte de circuit imprimé (PB) connectée électriquement à la bobine (30) ;
un boîtier (10, 20) logeant la carte de circuit imprimé (PB) et faisant face au ventilateur (I) ; et
un corps élastique (110) disposé entre le boîtier (10, 20) et le couvercle (90) et formé en une forme annulaire,
un rotor (40) du moteur (M) comprenant un arbre rotatif (42) et une culasse (44), **caractérisé en ce que** le couvercle (90) est formé avec un trou d'aération (96) disposé radialement vers l'extérieur du corps élastique (110), le trou d'aération (96) fait face au rotor (40) du moteur (M) dans une direction axiale du moteur (M) ;
et la culasse (44) est pourvue de trous d'aération (44a) autour de l'arbre rotatif (42).

2. Le dispositif de soufflage selon la revendication 1, dans lequel une longueur du trou d'aération (96) dans une direction circonférentielle est supérieure à celle du trou d'aération (96) dans une direction axiale du moteur (M).

3. Le dispositif de soufflage selon la revendication 1 ou 2, dans lequel le couvercle (90) comprend :
une partie de disque (91) faisant face à la bobine (30) dans une direction axiale (AD) du moteur (M) ; et
une partie cylindrique (95) s'étendant depuis un bord circonférentiel extérieur de la partie de disque (91) dans la direction axiale (AD), et
le trou d'aération (96) est formé dans la partie cylindrique (95).

4. Le dispositif de soufflage selon l'une quelconque des revendications 1 à 3, dans lequel
le couvercle (90) comprend une partie de guidage (98) guidant l'air vers le trou d'aération (96), et
la partie de guidage (98) fait saillie radialement vers l'extérieur depuis la partie cylindrique (95) et est disposée le long d'une surface (15) du boîtier (10, 20) faisant face au ventilateur (I).
